# EUROPEAN PATENT SPECIFICATION

(11) **EP 3 528 591 B1**
(45) Date of publication and mention of the grant of the patent: **07.04.2021**
(21) Application number: 17864652.7
(22) Date of filing: 27.10.2017
(51) Int. Cl.: H04W 88/06

(54) **DUAL-SIM CARD DUAL-CALL CONNECTION COMMUNICATION METHOD, TERMINAL, NETWORK AND SYSTEM**
DUAL-SIM-KARTEN-DUAL-ANRUF-VERBINDUNGSKOMMUNIKATIONSVERFAHREN, ENDGERÄT, NETZWERK UND SYSTEM
PROCÉDÉ, TERMINAL, RÉSEAU, ET SYSTÈME DE COMMUNICATION PAR CONNEXION À DOUBLE APPEL ET DOUBLE CARTE SIM

(30) Priority: 31.10.2016 CN 201610932973
(43) Date of publication of application: 21.08.2019
(73) Proprietor: Huawei Technologies Co., Ltd., Longgang District Shenzhen, Guangdong 518129 (CN)
(72) Inventor: LIU, Jiwu, Shenzhen, Guangdong 518129 (CN); WANG, Xinzhu, Shenzhen, Guangdong 518129 (CN); LIN, Guanggang, Shenzhen, Guangdong 518129 (CN)
(74) Representative: Gill Jennings & Every LLP
(86) International application number: PCT/CN2017/108093
(87) International publication number: WO 2018/077243

(56) References cited:
- WO-A1-2015/180138
- CN-A- 101 466 167
- CN-A- 101 990 319
- CN-A- 102 917 326
- CN-A- 103 369 507
- CN-A- 104 184 899
- CN-A- 105 472 760
- DE-A1-102013 114 500
- GB-A- 2 499 926
- US-A1- 2009 156 257
- US-A1- 2015 327 207

## Description

### TECHNICAL FIELD

The present invention relates to the field of mobile communications technologies, and in particular, to a dual card dual active communication method, a terminal, a network, and a system.

### BACKGROUND

With rapid development of wireless communications technologies, people increasingly rely on wireless terminals. To provide greater convenience for a user, a terminal already supports dual-card communication that may specifically include two types: dual card single active and dual card dual active. In a dual card communications technology, a chip of the terminal is required to support two sets of baseband processing protocols. In addition, the terminal may have one set of radio frequency and one set of antennas, and a corresponding dual-card communications technology is dual card single active. Certainly, the terminal may have two sets of radio frequency and two sets of antennas, and a corresponding dual card communications technology is dual card dual active.

However, if there is one set of radio frequency and one set of antennas (in other words, dual card single active), when the user makes a call by using one subscriber identity module (subscriber identity module, SIM) card stored in the terminal, the other SIM card cannot normally receive paging information, thereby affecting user experience. Even worse, if paging periods corresponding to the two SIM cards conflict, a paging missing probability is further increased.

To improve user experience and avoid a paging missing problem, a mobile phone that supports dual card dual active may be used. However, in a dual-card dual-active technology, requirements for a radio frequency chip and an antenna are extremely high. Because two sets of radio frequency chips and two sets of antennas are needed, it is extremely difficult to perform integration in a manufacturing process, and hardware costs of a corresponding terminal are also relatively high.

DE 10 2013 114500 A1, INTEL, 25 June 2015 discloses a mobile radio communication device, comprising: a radio communication circuit configured to provide a radio communication link to a base network of a first network or a base station of a second network, and a first subscriber identification module configured to register with an application server of the first network using the radio communication link; and a second subscriber identification module configured to register with an application server of the second network using the radio communication link. US 2015/327207 A1, BHARADWAJ MURALI BHASKARA RAO, 12 November 2015 discloses methods and devices for managing Internet Protocol Multimedia Subsystem (IMS) service registration on a wireless communication device having at least one SIM that supports IMS services. The wireless communication device may access network operator policies stored in the SIM(s), and identify enabled IMS services for each SIM. The wireless communication device may also identify, based on the accessed network operator policies, a registration type for each enabled IMS service on each SIM, determine whether to perform a single registration or a dual IMS registration for each of the at least one SIM, perform the determined registration using the accessed network operator policies, and maintain registration of the enabled IMS services for each SIM.

### SUMMARY

Embodiments of the present invention provide a dual-card dual-active communication method, a terminal, a network, and a system, to reduce a paging missing probability. The present invention is as defined in the appended independent claims. Further embodiments are provided by the dependent claims. Embodiments in the description not covered by the claims are provided for explanatory purpose only.

A first example useful for the understanding of the present invention provides a dual-card dual-active communication method, and the method is applied to a terminal that supports dual card dual active. The terminal includes a radio frequency circuit, and a first modem and a second modem that are separately coupled to the radio frequency circuit. The first modem includes a first Internet Protocol (Internet Protocol, IP) multimedia subsystem (IP Multimedia Subsystem, IMS) module, and the second modem includes a second IMS module. The method includes: sending, by the first IMS module, a first access request to a first gateway on a network side via the first modem and the radio frequency circuit, to request to access a first IMS network on the network side; and when the first IMS module stably camps on the first IMS network via the first gateway, sending, by the second IMS module, a second access request to a second gateway on the network side via the first modem and the radio frequency circuit, to request to access a second IMS network on the network side.

The terminal implements two communications links by using a set of radio frequency circuits and a set of modems. Dual card dual active can be implemented with reduced costs. In addition, because there are two different communications links, a paging missing probability can be reduced.

With reference to the first aspect, in a first possible implementation of the first aspect, the first access request includes registration information and authentication information that are corresponding to the first subscriber identity module. A condition according to which the second IMS module determines that the first IMS module stably camps on the first IMS network via the first gateway includes: after receiving a registration success response message and an authentication success response message that are for the first subscriber identity module and that are sent by the network side, sending, by the first IMS module, acknowledgement information to the second IMS module.

A communications connection may be established between the second IMS module and the second IMS network only when it is determined that the first IMS module stably camps on the first IMS network. In addition, a specific method of determining is that a terminal side receives a registration success response message and an authentication success response message that are sent by the network side, where the registration success response message indicates that the first IMS network successfully performs registration on the first subscriber identity module, and the authentication success response message indicates that the first IMS network successfully performs authentication on the first subscriber identity module.

With reference to the first aspect or the first possible implementation of the first aspect, in a second possible implementation of the first aspect, both the first gateway and the second gateway are packet data gateways.

A second example useful for the understanding of the present invention provides a dual-card dual-active communication method, and the method is applied to a network side. The network side includes a first gateway, a second gateway, a third gateway, a first IMS network coupled to the first gateway, and a second IMS network coupled to the third gateway. The method includes: receiving, by the first gateway, a first access request sent by a terminal, and establishing a communications connection between the first IMS network and the terminal based on the first access request; receiving, by the second gateway, a second access request sent by the terminal, establishing a transmission channel to the third gateway based on a mechanism of voice over Wireless Fidelity (Voice over Wi-Fi, VoWiFi), and sending the second access request to the third gateway by using the transmission channel; and establishing, by the third gateway, a communications connection between the second IMS network and the terminal based on the second access request.

The network side separately establishes communications connections to the terminal side by using two communications links, to implement dual card dual active. In addition, because the terminal side uses only one set of radio frequency circuits and one set of modems, dual card dual active can be implemented with reduced costs. In addition, because there are two different communications links, a paging missing probability and a paging probability can be reduced.

With reference to the second aspect, in a first possible implementation of the second aspect, the first access request includes registration information and authentication information that are corresponding to a first subscriber identity module SIM card. The method further includes: performing, by the first IMS network, registration on the first subscriber identity module based on the registration information corresponding to the first subscriber identity module, and performing authentication on the first subscriber identity module based on the authentication information corresponding to the first subscriber identity module; and sending a registration success response message and an authentication success response message for the first subscriber identity module to the terminal via the first gateway and the second gateway.

The first IMS network performs registration and authentication on the first subscriber identity module, to verify validity of the first subscriber identity module. After the registration and the authentication succeed, the terminal side is informed, so that the terminal side determines that the communications connection is established between the first IMS module and the first IMS network and that the first IMS module can stably camp on the first IMS network.

With reference to the second aspect, in a second possible implementation of the second aspect, the second access request includes registration information and authentication information that are corresponding to the second subscriber identity module. The method further includes: performing, by the second IMS network, registration on the second subscriber identity module based on the registration information corresponding to the second subscriber identity module; and performing, by the third gateway, authentication on the second subscriber identity module based on the authentication information corresponding to the second subscriber identity module, receiving a registration success response message that is for the second subscriber identity module and that is sent by the second IMS network, and sending the registration success response message and an authentication success response message for the second SIM to the terminal via the first gateway and the second gateway.

The second IMS network performs registration and authentication on the second subscriber identity module, to verify validity of the second subscriber identity module. It should be noted that in the present invention, a conventional manner of performing authentication on the second subscriber identity module is abandoned, to perform authentication on the second subscriber identity module via the third gateway.

With reference to any one of the second aspect to the second possible implementation of the second aspect, in a third possible implementation of the second aspect, the transmission channel established by the second gateway to the third gateway based on the mechanism of voice over Wireless Fidelity VoWiFi is an Internet Protocol Security (Internet Protocol Security, IPsec for short) channel.

Establishing the IPsec channel between the second gateway and the third gateway based on the mechanism of VoWiFi can avoid a conflict between a dedicated network and the Internet and ensure security and reliability of data transmission.

With reference to any one of the second aspect to the third possible implementation of the second aspect, in a fourth possible implementation of the second aspect, both the first gateway and the second gateway are packet data gateways, and the third gateway is an evolved packet data gateway.

A third example useful for the understanding of the present invention further provides a terminal, and the terminal includes a radio frequency circuit, and a first modem and a second modem that are separately coupled to the radio frequency circuit. The first modem includes a first IP multimedia subsystem IMS module, and the second modem includes a second IMS module. The first IMS module sends a first access request to a first gateway on a network side via the first modem and the radio frequency circuit, to request to access a first IMS network on the network side. The second IMS module is configured to: when it is determined that the first IMS module stably camps on the first IMS network via the first gateway, send a second access request to a second gateway on the network side via the first modem and the radio frequency circuit, to request to access a second IMS network on the network side.

The terminal implements two communications links by using a set of radio frequency circuits and a set of modems. Dual card dual active can be implemented with reduced costs. In addition, because there are two different communications links, a paging missing probability and a paging probability can be reduced.

With reference to the third aspect, in a first possible implementation of the third aspect, the first access request includes registration information and authentication information that are corresponding to a first subscriber identity module. A condition according to which the second IMS module determines that the first IMS module stably camps on the first IMS network via the first gateway includes: after receiving a registration success response message and an authentication success response message that are for the first subscriber identity module and that are sent by the network side, sending, by the first IMS module, acknowledgement information to the second IMS module.

A communications connection may be established between the second IMS module and the second IMS network only when it is determined that the first IMS module stably camps on the first IMS network. In addition, a specific method of determining is that a terminal side receives a registration success response message and an authentication success response message that are sent by the network side, where the registration success response message indicates that the first IMS network successfully performs registration on the first subscriber identity module, and the authentication success response message indicates that the first IMS network successfully performs authentication on the first subscriber identity module.

With reference to the third aspect or the first possible implementation of the third aspect, in a second possible implementation of the third aspect, both the first gateway and the second gateway are packet data gateways PGWs.

A fourth example useful for the understanding of the present invention further provides a communications network, and the communications network includes a first gateway, a second gateway, a third gateway, a first IMS network coupled to the first gateway, and a second IMS network coupled to the third gateway. The first gateway is configured to: receive a first access request sent by a terminal, and establish a communications connection between the first IMS network and the terminal based on the first access request. The second gateway is configured to: receive the second access request sent by the terminal, establish a transmission channel to the third gateway based on a mechanism of VoWiFi, and send the second access request to the third gateway by using the transmission channel. The third gateway is configured to establish a communications connection between the second IMS network and the terminal based on the second access request.

The network side separately establishes communications connections to the terminal side by using two communications links, to implement dual card dual active. In addition, because the terminal side uses only one set of radio frequency circuits and one set of modems, dual card dual active can be implemented with reduced costs. In addition, because there are two different communications links, a paging missing probability and a paging probability can be reduced.

With reference to the fourth aspect, in a first possible implementation of the fourth aspect, the first access request includes registration information and authentication information that are corresponding to the first subscriber identity module. The first IMS network is configured to: perform registration on the first subscriber identity module based on the registration information corresponding to the first subscriber identity module, and perform authentication on the first subscriber identity module based on the authentication information corresponding to the first subscriber identity module; and send a registration success response message and an authentication success response message for the first subscriber identity module to the terminal via the first gateway and the second gateway.

The first IMS network performs registration and authentication on the first subscriber identity module, to verify validity of the first subscriber identity module. After the registration and the authentication succeed, the terminal side is informed, so that the terminal side determines that the communications connection is established between the first IMS module and the first IMS network and that the first IMS module can stably camp on the first IMS network.

With reference to the fourth aspect, in a second possible implementation of the fourth aspect, the second access request includes registration information and authentication information that are corresponding to the second subscriber identity module. The second IMS network is configured to perform registration on the second subscriber identity module based on the registration information corresponding to the second subscriber identity module. The third gateway is further configured to: perform authentication on the second subscriber identity module based on the authentication information corresponding to the second subscriber identity module; receive a registration success response message that is for the second subscriber identity module and that is sent by the second IMS network; and send the registration success response message and an authentication success response message for the second SIM to the terminal via the first gateway and the second gateway.

The second IMS network performs registration and authentication on the second subscriber identity module, to verify validity of the second subscriber identity module. It should be noted that in the present invention, a conventional manner of performing authentication on the second subscriber identity module is abandoned, to perform authentication on the second subscriber identity module via the third gateway.

With reference to any one of the fourth aspect to the second possible implementation of the fourth aspect, in a third possible implementation of the fourth aspect, the transmission channel established by the second gateway to the third gateway based on the mechanism of VoWiFi is an Internet Protocol Security IPsec channel.

Establishing the IPsec channel between the second gateway and the third gateway based on the mechanism of VoWiFi can avoid a conflict between a dedicated network and the Internet and ensure security and reliability of data transmission.

With reference to any one of the fourth aspect to the third possible implementation of the fourth aspect, in a fourth possible implementation of the fourth aspect, both the first gateway and the second gateway are packet data gateways, and the third gateway is an evolved packet data gateway.

A fifth example useful for the understanding of the present invention further provides a communications system, and the communications system includes the terminal according to any one of the third aspect to the second possible implementation of the third aspect, and the communications network according to any one of the fourth aspect to the fourth possible implementation of the fourth aspect.

A sixth example useful for the understanding of the present invention provides a computer readable storage medium, including a computer readable instruction. When a computer reads and executes the computer readable instruction, the computer is enabled to execute a dual-card dual-active communication method.

A seventh example useful for the understanding of the present invention provides a computer program product, including a computer readable instruction. When a computer reads and executes the computer readable instruction, the computer is enabled to execute a dual-card dual-active communication method.

Based on the foregoing technical solution, in the dual-card dual-active communication method provided in the embodiments of the present invention, the first IMS module included in the terminal sends the first access request to the first gateway on the network side via the first modem and the radio frequency circuit, and when the first IMS module stably camps on the first IMS network via the first gateway, the second IMS module sends the second access request to the second gateway via the same set of the modem and the radio frequency circuit, to request to access the second IMS network on the network side. That is, the terminal can establish two communications links via the same set of the modem and the radio frequency circuit, to implement dual card dual active. In this way, manufacturing costs and manufacturing difficulty are reduced when dual card dual active is implemented. In addition, because there are two different communications links, a paging missing probability can be further reduced.

### BRIEF DESCRIPTION OF DRAWINGS

FIG. 1A and FIG. 1B are an architectural diagram of an application scenario corresponding to a dual-card dual-active communication method according to an embodiment of the present invention;
FIG. 2 is a schematic flowchart of a dual-card dual-active communication method according to an embodiment of the present invention;
FIG. 3 is a schematic flowchart of another dual-card dual-active communication method according to an embodiment of the present invention;
FIG. 4 is a schematic structural diagram of a terminal according to an embodiment of the present invention;
FIG. 5 is a schematic structural diagram of a communications network according to an embodiment of the present invention; and
FIG. 6 is a schematic structural diagram of a communications system according to an embodiment of the present invention.

### DESCRIPTION OF EMBODIMENTS

The technical solutions of the present invention are further described in detail with reference to the accompanying drawings and the embodiments in the following:
To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

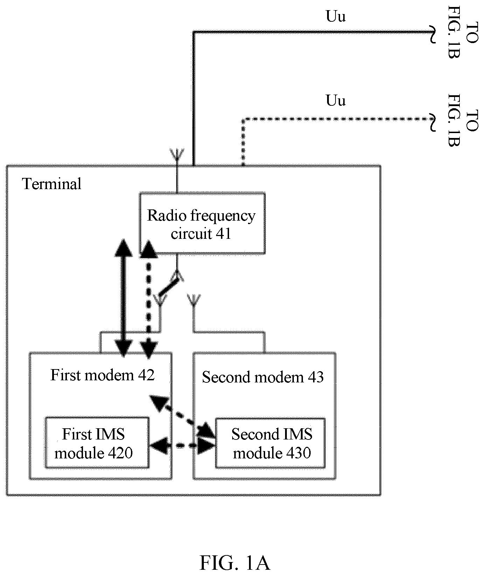

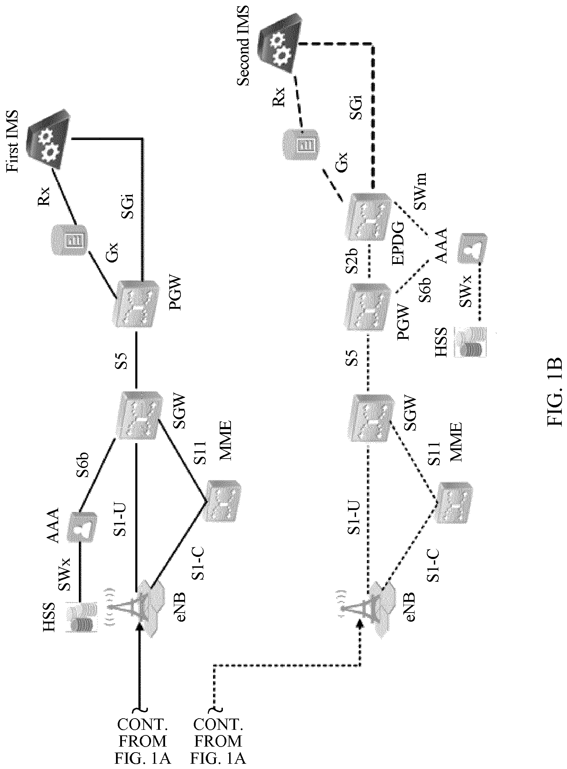

FIG. 1A and FIG. 1B are an architectural diagram of an application scenario corresponding to a dual-card dual-active communication method according to an embodiment of the present invention. As shown in FIG. 1A and FIG. 1B, the architectural diagram of the application scenario shows a terminal, a first gateway, a second gateway, a third gateway, a first IMS network, and a second IMS network. The terminal is a mobile phone that supports a dual-card dual-active function, the first gateway may be a first packet data gateway (Packet Data Gateway, PGW for short) corresponding to a first operator, the second gateway may be a second PGW gateway corresponding to a second operator, and the third gateway may be an evolved packet data gateway (Evolved Packet Data Gateway, EPDG). In addition, the system may further include: a first base station (evolved NodeB, eNB for short), a first mobility management unit (Mobility Management Entity, MME for short), a first serving gateway (Serving GateWay, S-GW for short), a first policy and charging rules function (Policy and Charging Rules Function, PCRF for short) unit, a first home subscriber server (Home Subscriber Server, HSS for short), and a first AAA (Authentication, Authorization, and Accounting, AAA for short) server that are corresponding to the first operator; and a second base station, a second MME, a second S-GW, a second PCRF, a second HSS, a second AAA server, and the like that are corresponding to the second operator. A specific connection relationship between functional components is shown in FIG. 1A and FIG. 1B. A solid-line track is a track of a communications link between communications elements corresponding to the first operator, and a dashed line represents a track of a communications link between communications elements corresponding to the second operator. No further description is provided herein. For functions executed by the terminal, the first gateway, the second gateway, the third gateway, the first IMS network, the second IMS network, and the like, refer to descriptions of a communication method procedure for implementing dual-card dual-active that are provided in Embodiment 1 and Embodiment 2 of the present invention. In addition, in the present invention, another remaining component is mainly configured to perform registration and authentication on the first subscriber identity module and the second subscriber identity module. Specific registration and authentication processes are described in detail in the existing 3rd Generation Partnership Project (3rd Generation Partnership Project, 3GPP) standard protocol. For details, refer to the related protocol. Details are not described herein.

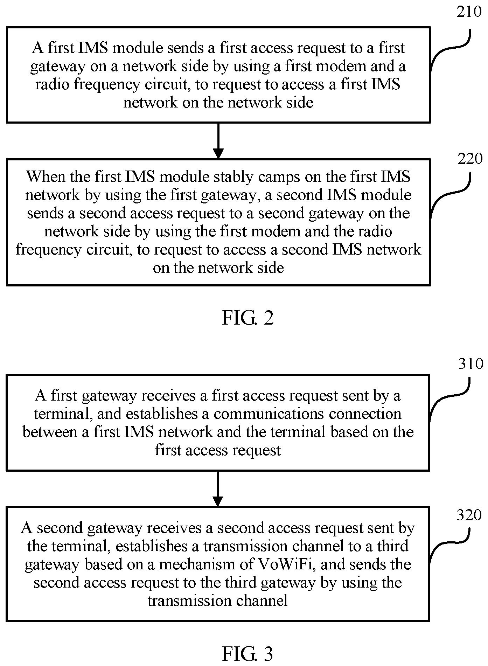

FIG. 2 is a schematic flowchart 200 of a dual-card dual-active communication method according to an embodiment of the present invention. The method is applied to a terminal that supports dual card dual active. The terminal includes a radio frequency circuit, and a first modem and a second modem that are separately coupled to the radio frequency circuit. The first modem includes a first IP multimedia subsystem IMS module, and the second modem includes a second IMS module. The method executed by the components in the terminal may include the following steps:

Step 210: The first IMS module sends a first access request to a first gateway on a network side by using the first modem and the radio frequency circuit, to request to access a first IMS network on the network side.

Specifically, the first access request includes registration information and authentication information that are corresponding to a first subscriber identity module, so that the first IMS network on the network side performs registration on the first subscriber identity module based on the registration information of the first subscriber identity module, and performs authentication on the first subscriber identity module based on the authentication information of the first subscriber identity module. In addition to the SIM card, the subscriber identity module may further be a subscriber identity module card that can be used for communication, such as a universal subscriber identity module (Universal Subscriber Identity Module, USIM) card or a virtual SIM card. A specific registration process and authentication process are described in detail in the 3GPP protocol. Details are not described herein.

A condition according to which the second IMS module determines that the first IMS module successfully camps on the first IMS network is as follows: After receiving a registration success response message and an authentication success response message that are for the first subscriber identity module and that are sent by the network side, the first IMS module sends acknowledgement information to the second IMS module, so that the second IMS module determines that the first IMS module successfully performs camps on the first IMS network.

Step 220: When the first IMS module stably camps on the first IMS network by using the first gateway, the second IMS module sends a second access request to a second gateway on the network side by using the first modem and the radio frequency circuit, to request to access a second IMS network on the network side.

Specifically, the second access request includes registration information and authentication information corresponding to the second subscriber identity module, so that the second IMS network on the network side performs registration on the second subscriber identity module based on the registration information of the second subscriber identity module and the third gateway on the network side performs authentication on the authentication information corresponding to the second subscriber identity module based on the authentication information of the second subscriber identity module. A process in which the second IMS network performs registration on the second subscriber identity module is described in detail in the 3GPP protocol, and a process in which the third gateway performs authentication on the second subscriber identity module is the same as or similar to the process in which the first IMS network performs authentication on the first subscriber identity module. This is similar to step 210. Similarly, no further description is provided herein.

Further, preferably, the first gateway and the second gateway are PGWs, and the third gateway is an ePDG

Based on the foregoing technical solution, in the dual-card dual-active communication method provided in this embodiment of the present invention, the first IMS module included in the terminal sends the first access request to the first gateway on the network side by using the first modem and the radio frequency circuit, and when the first IMS module stably camps on the first IMS network by using the first gateway, the second IMS module sends the second access request to the second gateway by using the same set of the modem and the radio frequency circuit, to request to access the second IMS network on the network side. That is, the terminal can establish two communications links by using the same set of the modem and the radio frequency circuit, to implement dual card dual active. In this way, manufacturing costs and manufacturing difficulty are reduced when dual card dual active is implemented. In addition, because there are two different communications links, a paging missing probability can be further reduced.

FIG. 3 is a schematic flowchart of a dual-card dual-active communication method according to an embodiment of the present invention. The method is applied to a communications network. The communications network includes a first gateway, a second gateway, a third gateway, a first IMS network coupled to the first gateway, and a second IMS network coupled to the third gateway. In addition, method steps specifically executed by the components on the network side include the following steps:

Step 310: The first gateway receives a first access request sent by a terminal, and establishes a communications connection between the first IMS network and the terminal based on the first access request.

Specifically, the first access request includes registration information and authentication information that are corresponding to the first subscriber identity module. After receiving the first access request sent by the terminal, the first gateway forwards the first access request to the first IMS network. The first IMS network first performs registration on the first subscriber identity module based on the registration information that is in the first access request and that is corresponding to the first subscriber identity module; and performs authentication on the first subscriber identity module based on the authentication information corresponding to the first SIM. A specific registration process and authentication process are described in detail in the 3GPP protocol. Details are not described herein. The first IMS network is further configured to send a registration success response message and an authentication success response message for the first subscriber identity module to the terminal by using the first gateway and the second gateway.

Step 320: The second gateway receives a second access request sent by the terminal, establishes a transmission channel to the third gateway based on a mechanism of VoWiFi, and sends the second access request to the third gateway by using the transmission channel.

Specifically, the second access request includes registration information and authentication information that are corresponding to the second subscriber identity module. After receiving the second access request sent by the terminal, the second gateway also forwards the second access request to the third gateway. The transmission channel is established between the second gateway and the third gateway based on the mechanism of VoWiFi. Preferably, the transmission channel may be an IPsec channel. Then, the second access request is transmitted to the third gateway by using the IPsec channel, to implement encrypted data transmission and ensure data transmission security.

Step 330: The third gateway is configured to establish a communications connection between the second IMS network and the terminal based on the second access request.

Specifically, the third gateway sends, to the second IMS network, the registration information that is in the second access request and that is of the second subscriber identity module. The second IMS network may further perform registration on the second subscriber identity module based on the registration information that is in the second access request and that is corresponding to the second subscriber identity module. When the registration succeeds, the second IMS network needs to send a registration success response message to the third gateway. The third gateway needs to receive the registration success response message that is for the second subscriber identity module and that is sent by the second IMS network. More importantly, the third gateway is configured to perform authentication on the second subscriber identity module based on the authentication information that is in the second access request and that is corresponding to the second subscriber identity module. Then, the third gateway sends the registration success response message and an authentication success response message for the second subscriber identity module to the terminal by using the first gateway and the second gateway. Similarly, a registration process and an authentication process are described in detail in the 3GPP protocol. Details are not described herein.

Preferably, the first gateway and the second gateway are PGWs, and the third gateway is an ePDG.

It should be understood that, the present invention mainly illustrates a registration success response message indicating that an IMS network on the network side successfully performs registration on a subscriber identity module stored in the terminal, and an authentication success response message indicating that the sending MS network on the network side successfully performs authentication on the subscriber identity module stored in the terminal (as described above, the third gateway may further perform authentication on the second subscriber identity module). A communications connection may be established between the first subscriber identity module or the second subscriber identity module and another subscriber identity module only when the registration and the authentication succeed. Certainly, the IMS network may fail to perform registration or authentication on the subscriber identity module. In this case, establishment of a communications connection between a terminal side and the network side fails.

After establishing the communications connection between the terminal and the first IMS network by using the first gateway and establishing the communications connection between the terminal and the second IMS network by using the second gateway and the third gateway, a call connection may be implemented.

In a specific embodiment, the first IMS network periodically detects whether there is a first call access request. For example, when there is the first call access request, the first IMS network sends first indication information to the first gateway, so that the first gateway forwards the first indication information to the first IMS module in the terminal device. The first IMS module establishes the call connection based on the first indication information. An answer icon and an end icon are displayed on a screen of the terminal device, so that the user can answer or cut off the first call connection.

Alternatively, in another specific example, the second IMS network also periodically detects whether there is a second call access request. When there is the second access request, the second IMS network sends second indication information to the third gateway, so that the third gateway forwards the second indication information to the second IMS module in the terminal device by using the second gateway. The second IMS module establishes a call connection based on the second indication information. An answer icon and an end icon are displayed on a screen of the terminal device, so that the user can answer or cut off the first call connection. However, in a special case, for example, if the connection is established between the first IMS module and the first IMS network by using the first modem and the radio frequency circuit, in other words, in an "occupied" state, when an external call tries to establish a connection to the second IMS module in the terminal by using the second IMS network, the connection fails. A specific implementation process is similar to a process in which a mobile phone implements a call connection. Details are not described herein.

In the dual-card dual-active communication method provided in this embodiment of the present invention, the first IMS module included in the terminal sends the first access request to the first gateway on the network side by using the first modem and the radio frequency circuit, and when the first IMS module stably camps on the first IMS network by using the first gateway, the second IMS module sends the second access request to the second gateway by using the same set of the modem and the radio frequency circuit, to request to access the second IMS network on the network side. That is, the terminal can establish two communications links by using the same set of the modem and the radio frequency circuit, to implement dual card dual active. In this way, manufacturing costs and manufacturing difficulty are reduced when dual card dual active is implemented. In addition, because there are two different communications links, a paging missing probability can be further reduced.

In the dual-card dual-active communication method provided in this embodiment of the present invention, the first gateway receives the first access request sent by the terminal, and establishes the communications connection between the first IMS network and the terminal based on the first access request. The second gateway receives the second access request sent by the terminal, and when the terminal stably camps on the first IMS network, the second gateway establishes a transmission channel to the third gateway based on the mechanism of VoWiFi, and establishes the communications connection between the second IMS network and the terminal based on the second access request by using the third gateway. The manufacturing costs and the manufacturing difficulty can be reduced when dual card dual active is implemented. In addition, because there are the two different communications links, the paging missing probability can be further reduced.

In the communication method procedure for implementing dual-card dual-active in the foregoing including Embodiment 1 and Embodiment 2, it should be noted that the registration process and the authentication process related to the above are performed only once. After the registration and the authentication succeed, the operations do not need to be performed again during subsequent working, and the corresponding call connection in the foregoing specific example is executed.

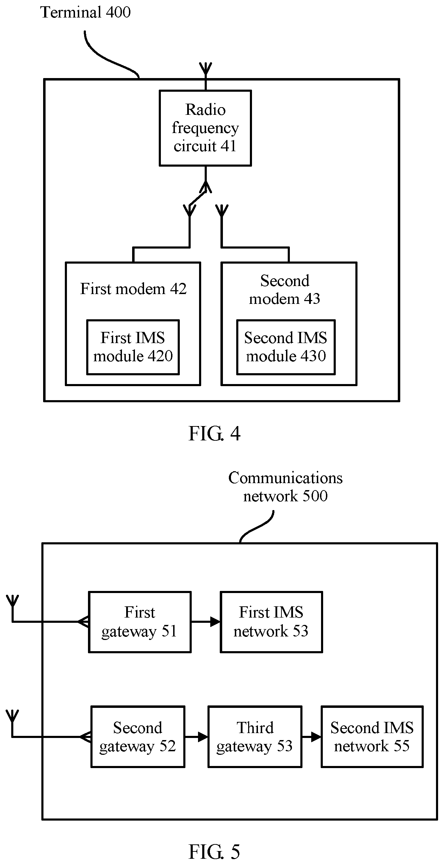

An embodiment of the present invention further provides a terminal. Method steps performed by components in the terminal are corresponding to the method procedure shown in FIG. 2. For a related feature, refer to the method steps and the method procedure. Specifically, as shown in FIG. 4, FIG. 4 is a schematic structural diagram of a terminal 400 according to an embodiment of the present invention. The terminal includes a radio frequency circuit 41, and a first modem 42 and a second modem 43 that are separately coupled to the radio frequency circuit. The first modem 42 includes a first IP multimedia subsystem IMS module 420, and the second modem 42 includes a second IMS module 430.

The first IMS module 420 sends a first access request to a first gateway on a network side by using the first modem 42 and the radio frequency circuit 41, to request to access a first IMS network on the network side.

When it is determined that the first IMS module 420 stably camps on the first IMS network by using the first gateway, the second IMS module 430 sends a second access request to a second gateway on the network side by using the first modem 42 and the radio frequency circuit 41, to request to access a second IMS network on the network side.

The first access request includes registration information and authentication information that are corresponding to the first subscriber identity module. In addition, a condition according to which the second IMS module determines that the first IMS module stably camps on the first IMS network by using the first gateway includes: after receiving a registration success response message and an authentication success response message that are for the first subscriber identity module and that are sent by the network side, sending, by the first IMS module, acknowledgement information to the second IMS module.

Preferably, both the first gateway and the second gateway are packet data gateways PGWs.

When running, the components of the terminal provided in Embodiment 3 of the present invention execute the executed method steps in the dual-card dual-active communication method provided in Embodiment 1 of the present invention. For working details of the components, refer to the method provided in Embodiment 1 of the present invention. Details are not described herein again.

According to the terminal provided in Embodiment 3 of the present invention, the first IMS module included in the terminal sends the first access request to the first gateway on the network side by using the first modem and the radio frequency circuit, and when the first IMS module stably camps on the first IMS network by using the first gateway, the second IMS module sends the second access request to the second gateway by using the same set of the modem and the radio frequency circuit, to request to access the second IMS network on the network side. That is, the terminal can establish two communications links by using the same set of the modem and the radio frequency circuit, to implement dual card dual active. Therefore, manufacturing costs and manufacturing difficulty are reduced when dual card dual active is implemented. In addition, because there are two different communications links, a paging missing probability can be further reduced.

An embodiment of the present invention further provides a communications network, and the communications network is corresponding to the method procedure shown in FIG. 2. For a related feature, refer to the communications network and the method procedure. Specifically, as shown in FIG. 5, FIG. 5 is a schematic structural diagram of a transmission system 500 on a network side according to an embodiment of the present invention. The system includes a first gateway 51, a second gateway 52, a third gateway 53, a first IMS network 54 coupled to the first gateway 51, and a second IMS network 55 coupled to the third gateway 53.

The first gateway 51 is configured to: receive a first access request sent by a terminal, and establish a communications connection between the first IMS network 54 and the terminal based on the first access request.

The first access request includes registration information and authentication information that are corresponding to the first subscriber identity module. The first IMS network 54 is configured to: perform registration on the first subscriber identity module based on the registration information corresponding to the first subscriber identity module, and perform authentication on the first subscriber identity module based on the authentication information corresponding to the first subscriber identity module. Then, the first IMS network sends a registration success response message and an authentication success response message for the first subscriber identity module to the terminal by using the first gateway 51 and the second gateway 52, so that the terminal determines, based on the registration success response message and the authentication success response message for the first subscriber identity module, that a communications connection is established between the terminal and the first IMS network 54 and that the terminal stably camps on the first IMS network 54.

The second gateway 52 is configured to: receive the second access request sent by the terminal, establish a transmission channel to the third gateway 53 based on a mechanism of VoWiFi, and send the second access request to the third gateway 53 by using the transmission channel.

The third gateway 53 is configured to establish a communications connection between the second IMS network 55 and the terminal based on the second access request.

Specifically, the second access request includes registration information and authentication information that are corresponding to the second subscriber identity module. The second IMS network 55 is configured to perform registration on the second subscriber identity module based on the registration information corresponding to the second subscriber identity module. The third gateway 53 is further configured to: perform authentication on the second subscriber identity module based on the authentication information corresponding to the second subscriber identity module, receive a registration success response message that is for the second subscriber identity module and that is sent by the second IMS network 55, and send the registration success response message and the authentication success response message for the second SIM to the terminal by using the first gateway 51 and the second gateway 52.

Preferably, the transmission channel established to the third gateway 53 by the second gateway 52 based on the mechanism of VoWiFi may be an Internet Protocol Security IPsec channel, to implement encrypted data transmission and ensure data transmission security. Further, both the first gateway 51 and the second gateway 52 are packet data gateways, and the third gateway 53 is an evolved packet data gateway.

When running, the components of the transmission system on the network side provided in Embodiment 4 of the present invention execute the executed method steps in the dual-card dual-active communication method provided in Embodiment 2 of the present invention. For working details of the components, refer to the method provided in Embodiment 2 of the present invention. Details are not described herein again.

In the transmission system on the network side provided in this embodiment of the present invention, the first gateway receives the first access request sent by the terminal, and establishes the communications connection between the first IMS network and the terminal based on the first access request. The second gateway receives the second access request sent by the terminal, and when the terminal stably camps on the first IMS network, the second gateway establishes a transmission channel to the third gateway based on the mechanism of VoWiFi, and establishes a communications connection between the second IMS network and the terminal based on the second access request by using the third gateway. Manufacturing costs and manufacturing difficulty can be reduced when dual card dual active is implemented. In addition, because there are two different communications links, a paging missing probability can be further reduced.

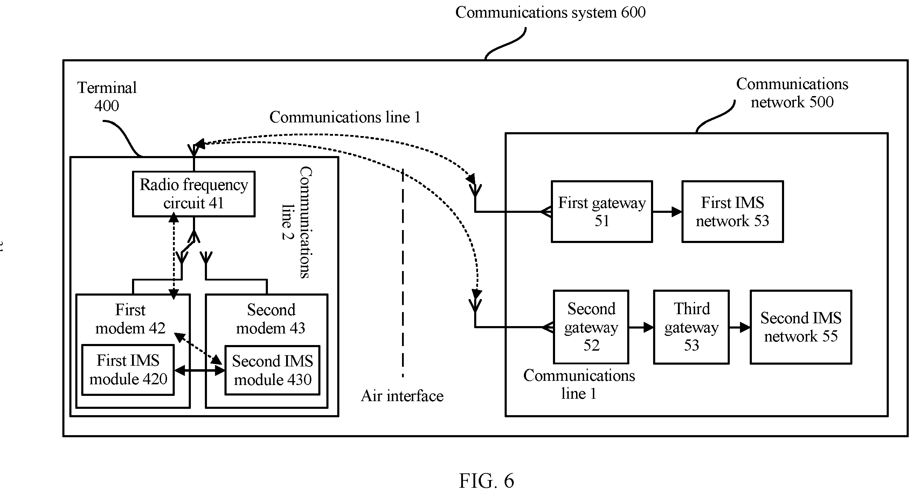

In addition, an embodiment of the present invention further provides a communications system 600. Specifically, as shown in FIG. 6, the system includes a terminal 601 described in Embodiment 3 and a transmission system 602 on a network side described in Embodiment 4. Method steps performed by the terminal 601 in the system and the network side transmission system 602 are described above in detail. Details are not described herein again. For a track of establishing a communications connection between a first IMS module and a network side, refer to a communications link 1 (solid-line track) in FIG. 6. In addition, for a track of establishing a connection between a second IMS module and the network side, refer to a communications link 2 (dashed-line part) in FIG 6.

Steps of methods or algorithms described in the embodiments disclosed in this specification may be implemented by hardware, a software module executed by a processing module, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

In the foregoing specific implementations, the objective, technical solutions, and benefits of the present invention are further described in detail. It should be understood that the foregoing descriptions are specific implementations of the present invention.

## Claims

1. A dual-card dual-active communication method, applied to a terminal that supports dual card dual active, wherein the terminal comprises a radio frequency circuit (41), and a first modem (42) and a second modem (43) that are separately coupled to the radio frequency circuit, the first modem comprises a first internet protocol multimedia subsystem, IMS, module (420), the second modem comprises a second IMS module (430), and the method comprises:
sending (210), by the first IMS module, a first access request to a first gateway on a network side via the first modem and the radio frequency circuit, to request to access a first IMS network on the network side;
receiving, by the first IMS module, a registration success response message and an authentication success response message that are for a first subscriber identity module from the network side; and
when the first IMS module stably camps on the first IMS network via the first gateway, sending (220), by the second IMS module, a second access request to a second gateway on the network side via the first modem and the radio frequency circuit, to request to access a second IMS network on the network side;
wherein a condition according to which the second IMS module determines that the first IMS module stably camps on the first IMS network via the first gateway includes:
after receiving the registration success response message and the authentication success response message that are for the first subscriber identity module and that are sent by the network side, sending, by the first IMS module, acknowledgement information to the second IMS module.

2. The method according to claim 1, wherein:
the first access request comprises registration information and authentication information that are corresponding to the first subscriber identity module, and
the second access request comprises registration information and authentication information that are corresponding to a second subscriber identity module.

3. The method according to any one of claims 1 to 2, wherein both the first gateway and the second gateway are packet data gateways, PGWs.

4. The method according to any one of claims 1 to 3, wherein the second access request, sent by the second IMS module, is used to establish a communications connection between the second IMS network and the terminal via a third gateway.

5. The method according to any one of claims 1 to 4, wherein:
the method is applied to a communications network, wherein the communications network comprises the first gateway, the second gateway, the third gateway, the first internet protocol multimedia subsystem, IMS, network coupled to the first gateway, and the second IMS network coupled to the third gateway, and the method comprises:
receiving, by the first gateway, the first access request sent by the terminal, and establishing a communications connection between the first IMS network and the terminal based on the first access request;
receiving, by the second gateway, the second access request sent by the terminal, establishing a transmission channel to the third gateway based on a mechanism of voice over Wireless Fidelity, VoWiFi, and sending the second access request to the third gateway via the transmission channel; and
establishing, by the third gateway, a communications connection between the second IMS network and the terminal based on the second access request.

6. The method according to claim 5, wherein the transmission channel established by the second gateway to the third gateway based on the mechanism of VoWiFi is an Internet Protocol Security, IPsec, channel.

7. The method according to any one of claims 4 to 6, wherein the third gateway is an evolved packet data gateway.

8. A terminal (400), wherein the terminal comprises a radio frequency circuit (41), and a first modem (42) and a second modem (43) that are separately coupled to the radio frequency circuit (41), the first modem (42) comprises a first internet protocol multimedia subsystem, IMS, module (420), and the second modem comprises a second IMS module (430);
the first IMS module (420) is configured to:
send a first access request to a first gateway on a network side via the first modem and the radio frequency circuit, to request to access a first IMS network on the network side; and
receive a registration success response message and an authentication success response message that are for a first subscriber identity module from the network side; and
the second IMS module (430) is configured to: when the first IMS module stably camps on the first IMS network via the first gateway, send a second access request to a second gateway on the network side via the first modem and the radio frequency circuit, to request to access a second IMS network on the network side;
wherein a condition according to which the second IMS module (430) determines that the first IMS module stably camps on the first IMS network (420) via the first gateway includes:
after receiving the registration success response message and the authentication success response message that are for the first subscriber identity module and that are sent by the network side, the first IMS module (420) is configured to send acknowledgement information to the second IMS module (430).

9. The terminal according to claim 8, wherein:
the first access request comprises registration information and authentication information that are corresponding to the first subscriber identity module, and
the second access request comprises registration information and authentication information that are corresponding to a second subscriber identity module.

10. The terminal according to claim 8 or 9, wherein:
the second access request, sent by the second IMS module, is used to establish a communications connection between the second IMS network and the terminal via a third gateway.

11. The terminal according to any one of claims 8 to 9, wherein both the first gateway and the second gateway are packet data gateways, PGWs.

12. The terminal according to claim 10, wherein the third gateway is an evolved packet data gateway.

13. A communications system, comprising a terminal and a network, configured to execute the method according to any one of claims 1 to 7.

14. A computer program product, comprising a computer readable instruction, wherein when a computer reads and executes the computer readable instruction, the computer is enabled to execute the method according to any one of claims 1 to 7.

## Patentansprüche

1. Dual-aktives Dual-Kartenkommunikationsverfahren, das in einem Endgerät angewandt wird, das dual-aktive Dual-Karten unterstützt, wobei das Endgerät einen Hochfrequenzschaltkreis (41) und ein erstes Modem (42) und ein zweites Modem (43) umfasst, die separat mit dem Hochfrequenzschaltkreis verbunden sind, wobei das erste Modem ein erstes Internetprotokoll-Multimedia-Subsystemmodul, IMS-Modul, (420) umfasst, das zweite Modem ein zweites IMS-Modul (430) umfasst, und
wobei das Verfahren umfasst:
Senden (210), einer ersten Zugriffsanforderung von dem ersten IMS-Modul an ein erstes Gateway auf einer Netzwerkseite über das erste Modem und den Hochfrequenzschaltkreis, um einen Zugriff auf ein erstes IMS-Netzwerk auf der Netzwerkseite anzufordern;
Empfangen, in dem ersten IMS-Modul, einer Registrierungserfolgsantwortnachricht und einer Authentifizierungserfolgsantwortnachricht, die von der Netzwerkseite für ein erstes Teilnehmeridentitätsmodul bestimmt sind; und
wenn das erste IMS-Modul über das erste Gateway stabil in dem ersten IMS-Netzwerk eingerichtet ist, Senden (220), eine zweite Zugriffsanforderung von dem zweiten IMS-Modul an ein zweites Gateway auf der Netzwerkseite über das erste Modem und den Hochfrequenzschaltkreis, um einen Zugriff auf ein zweites IMS-Netzwerk auf der Netzwerkseite anzufordern;
wobei eine Bedingung, gemäß der das zweite IMS-Modul ermittelt, dass das erste IMS-Modul über das erste Gateway stabil in dem ersten IMS-Netzwerk eingerichtet ist, aufweist:
nach dem Empfangen der Registrierungserfolgsantwortnachricht und der Authentifizierungserfolgsantwortnachricht, die für das erste TeilnehmerIdentitätsmodul bestimmt sind, und die von der Netzwerkseite gesendet werden, Senden von Bestätigungsinformationen von dem ersten IMS-Modul an das zweite IMS-Modul.

2. Verfahren nach Anspruch 1, wobei:
die erste Zugriffsanforderung Registrierungsinformationen und Authentifizierungsinformationen umfasst, die dem ersten Teilnehmeridentitätsmodul entsprechen, und
die zweite Zugriffsanforderung Registrierungsinformationen und Authentifizierungsinformationen umfasst, die einem zweiten Teilnehmeridentitätsmodul entsprechen.

3. Verfahren nach einem der Ansprüche 1 bis 2, wobei sowohl das erste Gateway als auch das zweite Gateway Paketdaten-Gateways, PGWs, sind.

4. Verfahren nach einem der Ansprüche 1 bis 3, wobei die zweite Zugriffsanforderung, die von dem zweiten IMS-Modul gesendet wird, verwendet wird, um über ein drittes Gateway eine Kommunikationsverbindung zwischen dem zweiten IMS-Netzwerk und dem Endgerät herzustellen.

5. Verfahren nach einem der Ansprüche 1 bis 4, wobei:
das Verfahren in einem Kommunikationsnetzwerk angewandt wird, wobei das Kommunikationsnetzwerk das erste Gateway, das zweite Gateway, das dritte Gateway, das erste Internetprotokoll-Multimedia-Subsystemnetzwerk, IMS-Netzwerk, das mit dem ersten Gateway verbunden ist, und das zweite IMS-Netzwerk umfasst, das mit dem dritten Gateway verbunden ist, und wobei das Verfahren umfasst:
Empfangen, in dem ersten Gateway, der ersten Zugriffsanforderung, die von dem Endgerät gesendet wird, und Herstellen einer Kommunikationsverbindung zwischen dem ersten IMS-Netzwerk und dem Endgerät aufgrund der ersten Zugriffsanforderung;
Empfangen, in dem zweiten Gateway, der zweiten Zugriffsanforderung, die von dem Endgerät gesendet wird, Herstellen eines Übertragungskanals zu dem dritten Gateway aufgrund eines Mechanismus eines WiFi-Telefonierens ("Mechanism of Voice over Wireless Fidelity", VoWiFi-Mechanismus), und Senden der zweiten Zugriffsanforderung über den Übertragungskanal an das dritte Gateway; und
Herstellen, durch das dritte Gateway, einer Kommunikationsverbindung zwischen dem zweiten IMS-Netzwerk und dem Endgerät aufgrund der zweiten Zugriffsanforderung.

6. Verfahren nach Anspruch 5, wobei der Übertragungskanal, der von dem zweiten Gateway zu dem dritten Gateway aufgrund des VoWiFi-Mechanismus hergestellt wird, ein Internetprotokollsicherheitskanal ("Internet Protocol Security channel", IPsec-Kanal) ist.

7. Verfahren nach einem der Ansprüche 4 bis 6, wobei das dritte Gateway ein erweitertes Paketdaten-Gateway ist.

8. Endgerät (400), wobei das Endgerät einen Hochfrequenzschaltkreis (41) und ein erstes Modem (42) und ein zweites Modem (43) umfasst, die separat mit dem Hochfrequenzschaltkreis (41) verbunden sind, wobei das erste Modem (42) ein erstes Internetprotokoll-Multimedia-Subsystemmodul, IMS-Modul, (420) umfasst, und wobei das zweite Modem ein zweites IMS-Modul (430) umfasst;
wobei das erste IMS-Modul (420) konfiguriert ist zum:
Senden einer ersten Zugriffsanforderung an ein erstes Gateway auf einer Netzwerkseite über das erste Modem und den Hochfrequenzschaltkreis, um einen Zugriff auf ein erstes IMS-Netzwerk auf der Netzwerkseite anzufordern; und
Empfangen einer Registrierungserfolgsantwortnachricht und einer Authentifizierungserfolgsantwortnachricht, die von der Netzwerkseite für ein erstes Teilnehmeridentitätsmodul bestimmt sind; und
wobei das zweite IMS-Modul (430) konfiguriert ist zum: wenn das erste IMS-Modul über das erste Gateway stabil in dem ersten IMS-Netzwerk eingerichtet ist, Senden einer zweiten Zugriffsanforderung an ein zweites Gateway auf der Netzwerkseite über das erste Modem und den Hochfrequenzschaltkreis, um einen Zugriff auf ein zweites IMS-Netzwerk auf der Netzwerkseite anzufordern;
wobei eine Bedingung, gemäß der das zweite IMS-Modul (430) ermittelt, dass das erste IMS-Modul über das erste Gateway stabil in dem ersten IMS-Netzwerk (420) eingerichtet ist, aufweist:
nach dem Empfangen der Registrierungserfolgsantwortnachricht und der Authentifizierungserfolgsantwortnachricht, die für das erste TeilnehmerIdentitätsmodul bestimmt sind, und die von der Netzwerkseite gesendet werden, dass das erste IMS-Modul (420) konfiguriert ist zum Senden von Bestätigungsinformationen an das zweite IMS-Modul (430).

9. Endgerät nach Anspruch 8, wobei:
die erste Zugriffsanforderung Registrierungsinformationen und Authentifizierungsinformationen umfasst, die dem ersten Teilnehmeridentitätsmodul entsprechen, und
die zweite Zugriffsanforderung Registrierungsinformationen und Authentifizierungsinformationen umfasst, die einem zweiten Teilnehmeridentitätsmodul entsprechen.

10. Endgerät nach Anspruch 8 oder 9, wobei:
die zweite Zugriffsanforderung, die von dem zweiten IMS-Modul gesendet wird, verwendet wird, um über ein drittes Gateway eine Kommunikationsverbindung zwischen dem zweiten IMS-Netzwerk und dem Endgerät herzustellen.

11. Endgerät nach einem der Ansprüche 8 bis 9, wobei sowohl das erste Gateway als auch das zweite Gateway Paketdaten-Gateways, PGWs, sind.

12. Endgerät nach Anspruch 10, wobei das dritte Gateway ein erweitertes Paketdaten-Gateway ist.

13. Kommunikationssystem, das ein Endgerät und ein Netzwerk umfasst, die konfiguriert sind, um ein Verfahren nach einem der Ansprüche 1 bis 7 auszuführen.

14. Computerprogrammprodukt, das einen computerlesbaren Befehl umfasst, wobei, wenn ein Computer den computerlesbaren Befehl liest und ausführt, der Computer aktiviert wird, um das Verfahren nach einem der Ansprüche 1 bis 7 auszuführen.

## Revendications

1. Procédé de communication à double carte et double activité appliqué à un terminal qui prend en charge une double carte et une double activité, le terminal comprenant un circuit radioélectrique (41) et un premier modem (42) et un second modem (43) qui sont couplés séparément au circuit radioélectrique, le premier modem comprenant un premier module de sous-système multimédia sur protocole Internet (IMS) (420), le second modem comprenant un second module IMS (430) et le procédé comprenant les étapes consistant à :
envoyer (210), par le premier module IMS, une première demande d'accès à une première passerelle sur un côté réseau par l'intermédiaire du premier modem et du circuit radioélectrique, pour demander un accès à un premier réseau IMS sur le côté réseau ;
recevoir, par le premier module IMS en provenance du côté réseau, un message de réponse de réussite d'enregistrement et un message de réponse de réussite d'authentification qui sont pour un premier module d'identité d'abonné ; et
quand le premier module IMS se parque de façon stable sur le premier réseau IMS par l'intermédiaire de la première passerelle, envoyer (220), par le second module IMS, une seconde demande d'accès à une deuxième passerelle sur le côté réseau par l'intermédiaire du premier modem et du circuit radioélectrique, pour demander un accès à un second réseau IMS sur le côté réseau ;
une condition selon laquelle le second module IMS détermine que le premier module IMS se parque de façon stable sur le premier réseau IMS par l'intermédiaire de la première passerelle incluant l'étape suivante :
après la réception du message de réponse de réussite d'enregistrement et du message de réponse de réussite d'authentification qui sont pour le premier module d'identité d'abonné et qui sont envoyés par le côté réseau, envoyer, par le premier module IMS, une information d'accusé de réception au second module IMS.

2. Procédé selon la revendication 1, dans lequel :
la première demande d'accès comprend une information d'enregistrement et une information d'authentification qui correspondent au premier module d'identité d'abonné, et
la seconde demande d'accès comprend une information d'enregistrement et une information d'authentification qui correspondent à un second module d'identité d'abonné.

3. Procédé selon l'une quelconque des revendications 1 et 2, dans lequel la première passerelle et la deuxième passerelle sont des passerelles de données de paquet (PGW).

4. Procédé selon l'une quelconque des revendications 1 à 3, dans lequel la seconde demande d'accès, envoyée par le second module IMS, est utilisée pour établir une connexion de communication entre le second réseau IMS et le terminal par l'intermédiaire d'une troisième passerelle.

5. Procédé selon l'une quelconque des revendications 1 à 4,
le procédé est appliqué à un réseau de communication, le réseau de communication comprenant la première passerelle, la deuxième passerelle, la troisième passerelle, le premier réseau de sous-système multimédia sur protocole Internet (IMS) couplé à la première passerelle et le second réseau IMS couplé à la troisième passerelle, et le procédé comprenant les étapes consistant à :
recevoir, par la première passerelle, la première demande d'accès envoyée par le terminal et établir une connexion de communication entre le premier réseau IMS et le terminal sur la base de la première demande d'accès ;
recevoir, par la deuxième passerelle, la seconde demande d'accès envoyée par le terminal, établir un canal de transmission avec la troisième passerelle sur la base d'un mécanisme de voix sur fidélité sans fil (VoWiFi) et envoyer la seconde demande d'accès à la troisième passerelle par l'intermédiaire du canal de transmission ; et
établir, par la troisième passerelle, une connexion de communication entre le second réseau IMS et le terminal sur la base de la seconde demande d'accès.

6. Procédé selon la revendication 5, dans lequel le canal de transmission établi par la deuxième passerelle avec la troisième passerelle sur la base du mécanisme de VoWiFi est un canal de sécurité sur protocole Internet (IPsec).

7. Procédé selon l'une quelconque des revendications 4 à 6, dans lequel la troisième passerelle est une passerelle de données de paquet évoluée.

8. Terminal (400), le terminal comprenant un circuit radioélectrique (41) et un premier modem (42) et un second modem (43) qui sont couplés séparément au circuit radioélectrique (41), le premier modem (42) comprenant un premier module de sous-système multimédia sur protocole Internet (IMS) (420) et le second modem comprenant un second module IMS (430) ;
le premier module IMS (420) étant configuré pour :
envoyer une première demande d'accès à une première passerelle sur un côté réseau par l'intermédiaire du premier modem et du circuit radioélectrique, pour demander un accès à un premier réseau IMS sur le côté réseau ; et
recevoir, en provenance du côté réseau, un message de réponse de réussite d'enregistrement et un message de réponse de réussite d'authentification qui sont pour un premier module d'identité d'abonné ; et
le second module IMS (430) étant configuré pour : quand le premier module IMS se parque de façon stable sur le premier réseau IMS par l'intermédiaire de la première passerelle, envoyer une seconde demande d'accès à une deuxième passerelle sur le côté réseau par l'intermédiaire du premier modem et du circuit radioélectrique, pour demander un accès à un second réseau IMS sur le côté réseau ;
une condition selon laquelle le second module IMS (430) détermine que le premier module IMS se parque de façon stable sur le premier réseau IMS (420) par l'intermédiaire de la première passerelle incluant :
après la réception du message de réponse de réussite d'enregistrement et du message de réponse de réussite d'authentification qui sont pour le premier module d'identité d'abonné et qui sont envoyés par le côté réseau, le premier module IMS (420) est configuré pour envoyer une information d'accusé de réception au second module IMS (430).

9. Terminal selon la revendication 8, dans lequel :
la première demande d'accès comprend une information d'enregistrement et une information d'authentification qui correspondent au premier module d'identité d'abonné, et
la seconde demande d'accès comprend une information d'enregistrement et une information d'authentification qui correspondent à un second module d'identité d'abonné.

10. Terminal selon la revendication 8 ou 9, dans lequel :
la seconde demande d'accès, envoyée par le second module IMS, est utilisée pour établir une connexion de communication entre le second réseau IMS et le terminal par l'intermédiaire d'une troisième passerelle.

11. Terminal selon l'une quelconque des revendications 8 et 9, dans lequel la première passerelle et la deuxième passerelle sont des passerelles de données de paquet (PGW).

12. Terminal selon la revendication 10, dans lequel la troisième passerelle est une passerelle de données de paquet évoluée.

13. Système de communication, comprenant un terminal et un réseau, configuré pour exécuter le procédé selon l'une quelconque des revendications 1 à 7.

14. Produit de programme informatique, comprenant une instruction lisible par ordinateur qui, lorsqu'un ordinateur lit et exécute l'instruction lisible par ordinateur, permet à l'ordinateur d'exécuter le procédé selon l'une quelconque des revendications 1 à 7.
